# FASCICULE DE BREVET EUROPEEN

(11) **EP 3 596 586 B1**
(45) Date de publication et mention de la délivrance du brevet: **21.02.2024**
(21) Numéro de dépôt: 18714572.7
(22) Date de dépôt: 14.03.2018
(51) Int. Cl.: G06F 3/039, G06F 3/0362, H04M 1/72412, H04M 1/72409, G06F 3/041

(54) **INTERFACE PHYSIQUE AVEC BOUTON PRESSION POUR SURFACE TACTILE, PROTECTION LA COMPORTANT, ET PROCÉDÉ, PROGRAMME ET TERMINAL CORRESPONDANTS**
PHYSISCHE SCHNITTSTELLE DRUCKKNOPF FÜR EINE BERÜHRUNGSEMPFINDLICHE OBERFLÄCHE, SCHUTZELEMENT DAMIT, UND ENTSPRECHENDE VERFAHREN, PROGRAMM UND ENDGERÄT
PHYSICAL INTERFACE WITH PRESSURE BUTTON FOR A TOUCH SENSITIVE SURFACE, PROTECTION COMPRISING THE SAME, AND CORRESPONDING PROCESS, PROGRAMME AND TERMINAL

(30) Priorité: 14.03.2017 FR 1752079
(43) Date de publication de la demande: 22.01.2020
(73) Titulaire: Orange, 92130 Issy-les-Moulineaux (FR)
(72) Inventeur: ESNAULT, Régis, 92326 Châtillon Cedex (FR); GREGOIRE, Christian, 92326 Châtillon Cedex (FR); PELLEN, Nicolas, 92326 Châtillon Cedex (FR)
(86) Numéro de dépôt international: PCT/FR2018/050602
(87) Numéro de publication internationale: WO 2018/167423

(56) Documents cités:
- EP-A1- 2 187 290
- DE-U1-202014 000 752
- US-A1- 2006 256 090
- US-A1- 2011 248 838
- US-A1- 2013 118 881
- US-B1- 8 482 540

## Description

L'invention concerne une interface physique pour surface tactile, une protection pour surface tactile, en particulier un écran tactile d'un terminal, tel qu'un smartphone ou une tablette, un procédé d'interface virtuelle d'un terminal, un programme et un terminal.

L'utilisation de surface tactile, notamment de terminaux dotés d'écran tactiles, tels que les tablettes et les smartphones, s'est démocratisée.

Ces interfaces tactiles rendent certaines interactions avec le terminal moins faciles, notamment les interactions de saisie.

En outre, l'absence de retour de force, c'est-à-dire la résistance à l'action de l'utilisateur, est aussi reprochée aux surfaces tactiles. Cette résistance peut complétée l'expérience proposé par le terminal lors de la mise en oeuvre d'une application.

De plus, le retour de force peut aussi rendre plus confortable l'interaction avec le terminal pour le client. En effet, la surface tactile est une surface dure qui engendre un choc dans les articulations contrairement aux touches d'un clavier ou d'une manette de jeux ou au manche d'une manette de jeux qui sont plus souple d'utilisation pour les articulations de la main.

Pour cette raison, des terminaux hybrides entre l'ordinateur portable et la tablette ont été conçus, des interfaces indépendantes qui sont connectés au terminal, tels que des claviers pour tablettes ou des manettes de jeux ou gamepad en anglais pour smartphone, sont proposés pour faciliter l'usage de certaines applications mises en oeuvre par ces terminaux. Chacun des documents EP 2187290 A1, DE 202014000752 U1 et US 2013/118881 A1 décrit une interface physique pour surface tactile comportant un bouton pression physique traversé par un contacteur qui permet une interaction avec un terminal par l'intermédiaire d'une surface tactile lorsque le bouton pression est positionné sur la surface tactile.

Un des buts de la présente invention est d'apporter des améliorations par rapport à l'état de la technique.

Un objet de l'invention est une interface physique pour surface tactile conformément à la revendication 1.

Ainsi, l'utilisateur peut interagir avec le terminal au moyen d'un bouton pression sans nécessité de connectique pour cette interface. Les risques liés à la fragilité des connectiques ou à l'appairage d'une interface physique avec le terminal sont ainsi réduits.

Ainsi, un clavier, un pavé numérique et/ou directionnelle, une manette de jeux permettent à l'utilisateur d'interagir avec le terminal au moyen de cette interface physique sans nécessité de connectique pour cette interface physique tout en réduisant les risques liés à la fragilité des connectiques ou à l'appairage d'une interface physique avec le terminal.

Ainsi, une seule interface physique peut être utilisable par plusieurs applications distinctes mises en oeuvre par le terminal. Cela évite que chaque application développe sa propre interface propriétaire et les risques d'erreurs d'utilisation d'une interface physique non approprié à une application mise en oeuvre par le terminal (mauvaise position d'interaction relativement à la surface tactile, mauvaise indication du type d'interaction sur l'interface physique, etc.).

Avantageusement, le bouton pression comporte :
- une surface supérieure permettant à un doigt d'un utilisateur d'exercer une pression sur le bouton pression,
- une surface inférieure positionnée au-dessus de la surface tactile apte à être mise en contact avec la surface tactile lorsqu'une pression est exercée sur le bouton pression, et
- un contacteur traversant le bouton pression de la surface supérieure à la surface inférieure du bouton pression, le contacteur étant positionné :
   - sur la surface supérieure pour être en contact avec le doigt de l'utilisateur exerçant une pression sur la surface supérieure du bouton pression, et
   - sur la surface inférieure pour être en contact avec la surface tactile lorsque la surface inférieure est mise en contact avec la surface tactile.

Ainsi, le bouton pression relaie le contact habituellement exercée par le doigt directement sur la surface tactile pour interagir avec le terminal via la surface tactile.

Avantageusement, le bouton pression comporte plusieurs contacteurs positionnés, chaque contacteur ayant une position distincte sur la surface supérieure et la surface inférieure du bouton pression permettant une interaction avec une surface distincte de la surface tactile.

Ainsi, le bouton pression peut servir de pavé directionnel, d'ascenseur, etc.

Avantageusement, le bouton pression comporte des fixations du bouton pression à une position relativement à la surface tactile.

Ainsi, le positionnement du bouton pression sera stable relativement à la surface tactile quelle que soit la position de celle-ci. Ceci peut être intéressant pour certaine application, notamment de lecture de contenu, ou le bouton sera positionné à une position spécifique pour permettre l'activation de la lecture du contenu ou la pause de cette lecture.

Avantageusement, le bouton pression est composé d'au moins un matériau souple.

Ainsi, le matériau souple permet de maintenir le contacteur à distance tant qu'une pression n'est pas exercée et laisse le contacteur venir au contact de la surface tactile lorsqu'une pression est exercée sur le bouton pression.

Avantageusement, le contacteur est composé d'un matériau conducteur.

Ainsi, le contacteur relaie la conductivité du doigt habituellement effectuée lors du contact direct sur la surface tactile pour interagir avec le terminal.

Le fournisseur d'identifiant comporte un contrôleur, le fournisseur d'identifiant transmettant une commande d'adaptation d'interface virtuelle générée par le contrôleur, la commande d'adaptation déclenchant la modification de l'interface virtuelle en fonction de l'identifiant de l'interface physique incluse dans la commande d'adaptation.

Ainsi, c'est l'interface physique qui contrôle l'adaptation de l'interface virtuelle du terminal évitant au terminal de mettre en oeuvre une détection d'interface physique déclenchant l'adaptation.

Un objet de l'invention est encore une protection pour surface tactile conformément à la revendication 7.

Ainsi, l'interface physique a non seulement un rôle dans l'interaction de l'utilisateur avec le terminal : confort d'utilisation et/ou retour de forces et/ou facilité d'interactions tout en limitant les risques de problèmes de connexion mais aussi un rôle de protection, notamment de protection contre les chocs.

Un objet de l'invention est également un procédé d'interface virtuelle d'un terminal conformément à la revendication 8.

Ainsi, l'interface virtuelle est adaptée à l'interface physique permettant une optimisation de l'interaction avec le terminal au moyen d'une interface physique quel que soit le traitement, l'application mise en oeuvre par le terminal.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un terminal avec lequel un utilisateur interagit au moyen d'une surface tactile et étant conçus pour commander l'exécution des différentes étapes de ce procédé.

L'invention vise donc aussi un programme comprenant des instructions de code de programme pour l'exécution des étapes du procédé d'interface virtuelle selon l'invention lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un terminal conformément à la revendication 10.

Les caractéristiques et avantages de l'invention apparaîtront plus clairement à la lecture de la description, faite à titre d'exemple, et des figures s'y rapportant qui représentent :
- Figures 1a et 1b, des interfaces physiques pour terminaux avec écran tactile, respectivement une manette de jeux pour smartphone et un clavier pour tablette, selon l'art antérieur ;
- Figures 2a et 2b, des schémas simplifiés, vu en coupe, d'un bouton pression dans un premier mode de réalisation de l'invention, respectivement lorsque le bouton pression est au repos et lorsque le bouton pression est sous pression notamment du doigt d'un utilisateur ;
- Figure 3, un schéma simplifié, vu en coupe, d'un bouton pression dans un deuxième mode de réalisation de l'invention ;
- Figure 4, un schéma simplifié en trois dimensions d'un bouton pression multi-contacteur selon l'invention ;
- Figures 5a et 5b, des schémas simplifié de mode de réalisation distincts des fixations d'un bouton pression selon l'invention, respectivement par succion, ou par coopération avec une protection de la surface tactile ;
- Figures 6a et 6b, des schémas simplifiés d'une interface physique selon l'invention, respectivement une vue globale et vu en coupe d'une partie de l'interface physique ;
- Figures 7a, 7b et 7c, des schémas simplifiés de protection selon l'invention, respectivement une vue globale d'une protection intégrant un clavier, une vue globale d'une protection intégrant une manette de jeux, et une vue en coupe ;
- Figures 8a, 8b, 8c et 8d, des schémas simplifiés de différents exemples de réalisation d'une protection selon l'invention,
- Figure 9, un schéma simplifié d'un procédé d'interface virtuelle selon l'invention ;
- Figure 10, un schéma d'un terminal selon l'invention.

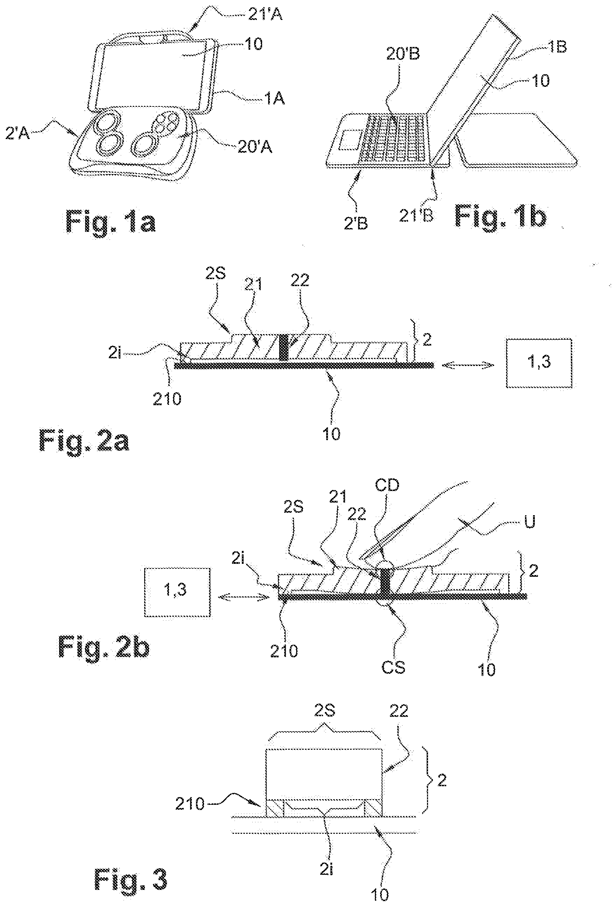

Les figures 1a et 1b illustrent des interfaces physiques pour terminaux avec écran tactile selon l'art antérieur.

Dans ces figures, le terminal 1A, 1B comporte un écran tactile 10. Pour interagir avec ce terminal 1A, 1B, un utilisateur touche, par exemple, avec au moins un de ses doigts l'écran tactile 10 sur une zone de l'écran affichant une commande d'une interface virtuelle implémentée par le terminal1A, 1B.

L'art antérieur propose pour faciliter l'interaction des utilisateurs avec ces terminaux à écran tactile 1A, 1B, de les connecter physiquement (microUSB, USB, etc.) ou par appairage radio (Bluetooth, WiFi, etc.) à une interface physique 20'A, 20'B. L'interface physique 20'A, 20'B est éventuellement implémentée sur un dispositif support 2'A, 2'B permettant notamment de maintenir le terminal 1A, 1B dans une position prédéterminée apportant ainsi un confort de vision, lecture pour l'utilisateur.

La figure 1a montre une manette de jeux 20'A pour smartphone 1A. Et, la figure 1b montre un clavier 20'B pour tablette 1B.

Les figures 2a et 2b illustrent des schémas simplifiés, vu en coupe, d'un bouton pression pour surface tactile dans un premier mode de réalisation de l'invention. La figure 3 illustre un bouton pression dans un deuxième mode de réalisation.

Ces trois figures représentent un bouton pression physique 2 pour surface tactile, telle qu'une surface tactile 10 d'une tablette graphique 1 connectée à un terminal 3 ou un écran tactile 10 d'un terminal 1, qui est apte à permettre une interaction avec un terminal 1, 3 par l'intermédiaire d'une surface tactile 10 lorsque le bouton pression 2 est positionné sur la surface tactile 10.

Le bouton pression 2 comporte un contacteur 22 traversant le bouton pression 2 de la surface supérieure 2S du bouton pression à la surface inférieure 2I du bouton pression, comme illustré en particulier par les figures 2a et 2b.

Ainsi, un utilisateur U peut interagir avec le terminal 1, 3 non plus par contact direct avec la surface tactile 10 mais au moins d'un bouton pression 2 sans nécessité de connectique pour cette interface supplémentaire (comportant le bouton pression). Les risques liés à la fragilité des connectiques ou à l'appairage d'une interface physique avec le terminal sont ainsi réduits.

Un tel bouton pression 2 peut être placé par l'utilisateur U à une position relative par rapport à la surface tactile 10 à un instant pour commander une interaction déterminée avec le terminal 3. Lorsque l'interaction est terminée, le bouton pression 2 peut rester à la même position relativement à la surface tactile 10 permettant de commander à nouveau ultérieurement la même interaction en limitant ainsi le risque d'erreur d'interaction. En effet, l'utilisation du doigt de l'utilisateur ou d'un stylet pour effectuer le contact avec la surface tactile 10 permettant de déclencher une interaction avec le terminal 3 empêche de conserver cette position : l'utilisateur utilisant sa main pour d'autres manipulations (le stylet devra donc être déposé).

En particulier, le bouton pression 2 comporte :
- une surface supérieure 2S permettant à un doigt d'un utilisateur U d'exercer une pression sur le bouton pression 2,
- une surface inférieure 2I positionnée au-dessus de la surface tactile 10 apte à être mise en contact avec la surface tactile 10 lorsqu'une pression est exercée sur le bouton pression 2, et
- un contacteur 22 traversant le bouton pression 2 de la surface supérieure 2S à la surface inférieure 2I du bouton pression 2, le contacteur 22 étant positionné :
   - sur la surface supérieure 2S pour être en contact CD avec le doigt de l'utilisateur U exerçant une pression sur la surface supérieure 2S du bouton pression 2, et
   - sur la surface inférieure 2I pour être en contact CS avec la surface tactile 10 lorsque la surface inférieure 2I est mise en contact avec la surface tactile 10.

En particulier, le bouton pression 2 est composé d'au moins un matériau souple 21.

En particulier, le contacteur 22 est composé d'un matériau conducteur. Le matériau conducteur est notamment un matériau souple, tel qu'un matériau polymère, élastomère ou ayant des caractéristiques physiques similaires notamment en terme de flexibilité.

En particulier, le bouton pression 2 peut comporter différente proportion de matériau souple 21 et de matériau conducteur 22 de majoritairement en matériau souple non conducteur à majoritairement en matériau conducteur 22. Par exemple, uniquement le périmètre 210 du bouton pression 2 en contact permanent avec la surface tactile 10 sera en matériau souple non conducteur 21, le reste du bouton pression étant en matériau conducteur 22. A tout le bouton pression sera composé en matériau souple non conducteur 21 sauf un fil, un ruban, une tige en matériau conducteur 22 ... au centre du bouton pression 2 ou sur deux, quatre... points du bouton pression 2 dans le cas d'un bouton pression multi-contacteur.

En particulier, le bouton pression 2 comporte au moins une entretoise 210 placé sous la surface inférieure du bouton pression. L'entretoise 210 est toujours distincte du contacteur 22.

L'entretoise 210 est apte à isoler le contacteur 22 de la surface tactile 10 au moins lorsque le bouton pression 2 est au repos, notamment en maintenant le contacteur 22 à distance de la surface tactile 10. Ainsi, le bouton pression 2 au repos ne déclenche pas une interaction avec le terminal 1, 3 via la surface tactile 10.

Soit le bouton pression 2 comporte une unique entretoise à la périphérie externe du bouton pression 2 (c'est-à-dire faisant le tour externe du bouton pression 2), soit plusieurs entretoises placées à plusieurs positions de cette périphérie externe du bouton pression 2.

La surface tactile est notamment résistive ou capacitive. Par exemple, aujourd'hui, les écrans tactiles embarqués dans les véhicules ou servant dans certains milieux professionnels sont généralement des écrans résistifs alors que ceux utilisés par le grand public sont plutôt des écrans capacitifs.

Dans le cas des surfaces tactiles capacitives, le bouton pression 2 comportera un contacteur 22 en matériau conducteur afin de permettre une interaction avec le terminal via la surface tactile au moyen du bouton pression 2. Alors que, dans le cas des surfaces tactiles résistives, la composition du contacteur 22 du bouton pression 2 n'influe pas sur l'établissement de l'interaction avec le terminal via la surface tactile au moyen du bouton pression 2.

La figure 2a montre le bouton pression 2 lorsqu'il est au repos.

Dans l'exemple de la figure 2a, le bouton pression 2 est au repos. Il est composé d'un matériau souple 21 de sa surface supérieure 2S à sa surface inférieure 2I sauf un cylindre central en matériau conducteur 22 constituants un contacteur. La surface inférieure 2I sur laquelle affleure le contacteur 22 est à distance de la surface tactile 10 permettant d'interagir avec le terminal 1, 3.

En particulier, le bouton pression 2 comporte des entretoises 210 placées en périphérie du bouton pression 2 sous sa surface inférieure 2I. Les entretoises sont notamment en matériau souple.

La figure 2b montre le bouton pression lorsqu'il est sous pression notamment du doigt d'un utilisateur.

Le bouton pression 2 illustrée par la figure 2a est mis sous pression par l'utilisateur U souhaitant interagir avec le terminal 1, 3.

Dans l'exemple de la figure 2b, le bouton pression 2 se déforme sous la pression de telle sorte que le contacteur 22 touche la surface tactile 10. Cette déformation est notamment possible en raison d'un ou plusieurs paramètres du bouton pression 2 :
- le degré de flexibilité du matériau souple 21 du bouton pression 2 de sa surface supérieure 2S à sa surface inférieure 2I ;
- les dimensions de la surface 2S ;
- la composition des entretoises 210 (notamment dans un matériau souple, tel que celui utilisé dans le reste du bouton pression 2) ;
- les dimensions des entretoises ;
- le degré de flexibilité du contacteur 22 ;
- les dimensions du contacteur 22.

Dans l'exemple de la figure 2a, la déformation est lié au matériau souple 21 utilisé dans la composition de la majeure partie du bouton pression 2 y compris dans les entretoises 210, et à la grande dimension de la surface inférieure 2I entre les entretoises 210.

Le contacteur 22 est alors en contact CD avec le doigt de l'utilisateur U et la surface tactile 10 transmettant l'interaction du doigt à la surface tactile. Dans le cas où le contacteur 22 est en matériau conducteur comme l'illustre la figure 2b, la transmission de l'interaction du doigt de l'utilisateur U consiste en une transmission de la conductivité du doigt à la surface tactile déclenchant l'interaction avec le terminal 1, 3.

Quel que soit le mode de réalisation, le contacteur 22 n'occupe ni toute la surface supérieure du bouton pression ni toute la surface inférieure du bouton pression. Le bouton pression 2 comporte alors deux parties distinctes dont l'une constitue le contacteur 22. En d'autres termes, le bouton pression comporte un premier volume 21 et un deuxième volume 22, le premier et le deuxième volume sont distincts, le deuxième volume constituant le contacteur 22

De plus, le contacteur 22 est notamment constitué par une tige cylindrique, de profil cubique, etc. ou une zone spécifique en trois dimensions dans le bouton pression. Ce contacteur est notamment constitué par un matériau permettant lors d'un contact avec une surface tactile notamment résistive ou conductrice une interaction équivalente à celle due au contact d'un doigt, tel qu'un matériau conducteur ou résistif : par exemple des matériaux métalliques, des plastiques conducteurs, des matériaux dopés en conductivité/résistivité, des nanostructures spécifiques, telles que métalliques, conductrices, et/ou résistives, intégrées dans le contacteur 22.

La figure 3 illustre un schéma simplifié, vu en coupe, d'un bouton pression dans un deuxième mode de réalisation de l'invention ;

Dans ce deuxième mode de réalisation, une zone (non illustrée) traversante prédéfinie du bouton pression (ne composant pas la totalité du bouton pression 2) entre la surface supérieure 2S et la surface inférieure 2I compose le contacteur 22. Suivant la position du contacteur 22 dans le bouton pression, en particulier sur la surface inférieure du bouton pression, le bouton pression 2 comporte éventuellement une entretoise 210 permettant séparant la surface tactile au repos par au moins une entretoise 210.

Eventuellement, l'entretoise 210 est en matériau souple laissant le contacteur 22 toucher la surface tactile 10 lorsque le bouton pression 10 est en pression, c'est-à-dire lorsque l'utilisateur U appuie, notamment au moins d'un de ses doigts sur le bouton pression 2.

En particulier, le contacteur 22 est en matériau conducteur souple permettant au contacteur 22 de se déformer sous la pression d'un doigt d'un utilisateur pour être mis en contact avec la surface tactile 10 lorsque le bouton pression 2 est sous pression.

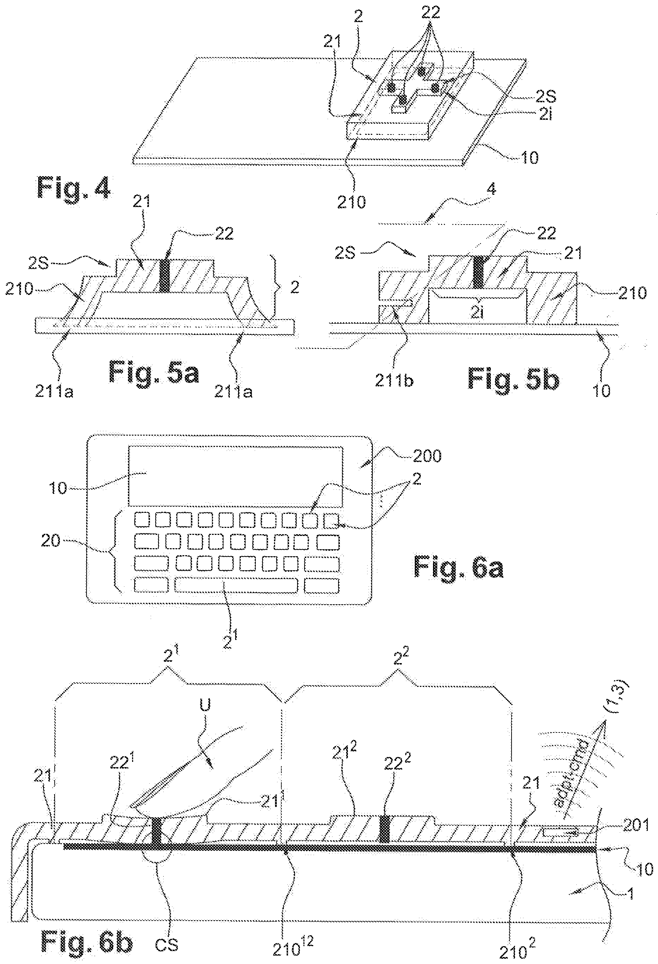

La figure 4 illustre un schéma simplifié en trois dimensions d'un bouton pression multi-contacteur selon l'invention ;
En particulier, le bouton pression 2 comporte plusieurs contacteurs 20. Chaque contacteur 20 a une position distincte sur la surface supérieure 2S et la surface inférieure 2I du bouton pression 2 permettant une interaction avec une partie distincte de la surface tactile.

La figure 4 montre un bouton pression 2 comportant 4 contacteurs 20 par exemple pour une interaction directionnelle : haut, bas, droite, gauche avec le terminal connecté à la surface tactile 10.

Le bouton pression 2 est composé d'un premier matériau 21 de la surface supérieure 2S à la surface inférieure 2I. Ce premier matériau est distinct du matériau composant les quatre contacteurs 20.

La composition et les dimensions du bouton pression sont telles que la déformation du bouton pression 2 lors d'une pression sur un des contacteurs 22 entraine le contact d'un seul contacteur 22 avec la surface tactile 10 présente sous le bouton pression 2 : le contacteur 22 au-dessus duquel la pression a été exercée sur le bouton pression 2.

En particulier, le bouton pression comporte au moins une entretoise isolant les contacteurs de la surface tactile lorsque le bouton pression est au repos. En particulier, la position et/ou le matériau (éventuellement le premier matériau) composant l'entretoise est telle que la déformation d'une ou plusieurs des au moins une entretoise 210 et/ou du premier matériau du bouton pression 2 ne permette le contact avec la surface tactile 10 que d'un seul des quatre contacteurs 22.

L'avantage d'un bouton pression multi-contacteur est de permettre en positionnant un seul bouton plusieurs interactions distinctes : tel que des interactions avec un ascenseur de fenêtre de traitement (éditeur, lecture, navigation, etc.), des interactions multidirectionnelles par exemple pour un jeu, etc.

Les figures 5a et 5b illustrent des schémas simplifiés de mode de réalisation distincts des fixations d'un bouton pression selon l'invention.

En particulier, le bouton pression 2 comporte des fixations 211 du bouton pression 2 à une position relativement à la surface tactile 10.

La figure 5a montre un bouton pression 2 maintenu par succion à une position relativement à la surface tactile 10. Le bouton pression 2 comporte au moins une fixation 211a agissant seule ou en combinaison avec d'autres fixations 211a du bouton pression 2 pour créer entre le bouton pression 2 et la surface tactile 10 un effet de succion, aussi nommé effet ventouse, permettant au bouton pression placé à un première position relativement à la surface tactile 10 de conserver cette première position quelle que soit la position de la surface tactile (horizontale, verticale, à 45°, 30°, etc. ) lors de son utilisation tant que l'utilisateur U ne modifie pas cette position du bouton pression.

L'avantage de telles fixations est qu'elles permettent de positionner le bouton pression à n'importe quelle position relativement à la surface tactile même au milieu de celle-ci sans imposer d'autres contraintes sur la visibilité du reste de la surface tactile.

La figure 5b montre un bouton pression maintenu par coopération avec une protection de la surface tactile à une position relativement à la surface tactile.

La figure 5a montre un bouton pression 2 maintenu par coopération avec un dispositif tiers tel qu'une protection 4 de la surface tactile à une position relativement à la surface tactile 10. Le bouton pression 2 comporte au moins un ancrage 211b, telle que notamment une encoche, agissant seule ou en combinaison avec d'autres ancrages 211b du bouton pression 2 pour permettre au bouton pression 2 de coopérer avec une protection 4 de la surface tactile 10, permettant au bouton pression placé à un première position relativement à la surface tactile 10 de conserver cette première position quelle que soit la position de la surface tactile (horizontale, verticale, à 45°, 30°, etc. ) lors de son utilisation tant que l'utilisateur U ne modifie pas cette position du bouton pression.

De tels ancrages permettant d'ancrer le bouton pression 2 non pas directement sur la surface tactile 10 mais sur une protection 4 de la surface tactile limitent les risques de détérioration de la surface tactile (rayures, déconnexion du verre de l'écran de la sous-couche conductrice, etc.).

Les figures 6a et 6b illustrent des schémas simplifiés d'une interface physique selon l'invention.

Une interface physique 20 pour surface tactile comporte au moins un bouton pression physique 2 pour surface tactile. Le bouton pression 2 est apte à permettre une interaction avec un terminal 1, 3 par l'intermédiaire d'une surface tactile 10 lorsque le bouton pression 2 est positionné sur la surface tactile 10.

En particulier, l'interface physique 20 comporte un fournisseur *201* d'un identifiant de l'interface physique *IP_id* au terminal 1,3 de telle sorte que l'identifiant de l'interface physique *IP_id* permette au terminal 1, 3 une modification d'une interface virtuelle avec le terminal 1, 3. La modification est fonction de l'identifiant de l'interface physique *IP_id.*

En particulier, le fournisseur d'identifiant 201 est constitué par au moins un des dispositifs suivants :
- un symbole apposé sur l'interface physique, notamment un code-barres, un code QR, un numéro de série, etc. ;
- un objet placé dans ou sur l'interface physique à une position codant l'identifiant de l'interface physique, la position de l'objet sur l'interface physique étant détectable par le terminal (par exemple, l'objet est un aimant dont la position est détectable par les magnétomètres du terminal) ;
- un circuit de transmission avec une mémoire contenant l'identifiant de l'interface physique, le circuit étant un circuit de transmission avec ou sans contact, tel qu'une puce RFID ou NFC, etc.

Selon l'invention, le fournisseur d'identifiant 201 comporte un contrôleur (non illustré). Le fournisseur d'identifiant 201 transmettant une commande d'adaptation *adpt_cmd* d'interface virtuelle générée par le contrôleur. La commande d'adaptation *adpt_cmd* déclenche la modification de l'interface virtuelle en fonction de l'identifiant de l'interface physique *IP_id* incluse dans la commande d'adaptation *adpt_cmd.*

Notamment, le fournisseur d'identifiant 201 est constitué et/ou placé sous un bouton pression 2 qui permet d'activer l'interface virtuelle correspondante sur l'écran tactile. Par exemple, la forme du bouton pression et/ou sa position sur l'écran tactile et/ou un fournisseur d'identifiant supplémentaire placé sous un bouton pression (puce RFID, NFC, QR code...) détectée par l'écran tactile permet l'identification de l'interface physique et la modification en conséquence de l'interface virtuelle.

L'avantage d'une interface physique comportant plusieurs boutons pression pour surface tactile est sa facilité de transport et de manipulation par rapport à la surface tactile évitant des pertes de boutons, des erreurs de positionnement relativement à la surface tactile, des lenteurs de mise en oeuvre (pour un grand nombre de boutons pressions), etc.

La figure 6a montre une vue globale d'un exemple d'interface physique selon l'invention.

L'interface physique 20 est notamment fournie sur un support 200. Elle est apte à être disposé sur une surface tactile 10 afin de permettre à un utilisateur U d'interagir avec un terminal 1, 3 connecté à la surface tactile par pression sur au moins un bouton pression 2 de l'interface physique 20 qui transmet l'interaction au terminal 1, 3 via la surface tactile 10.

Dans l'exemple de la figure 6a, les boutons pression 2 de l'interface physique 20 constituent un clavier alphanumérique.

La figure 6b montre une vue en coupe d'une partie d'un exemple de réalisation d'une interface physique selon l'invention.

L'interface physique 20 est constituée de plusieurs boutons pression 2¹, 2²... Un bouton pression 2¹, 2²... comporte un contacteur 22¹, 22²... et est composé d'un matériau souple 21¹, 21²... permettant une déformation du bouton pression lorsqu'un utilisateur U le met sous pression telle que la déformation entraîne un contact CS du contacteur 22¹ du bouton pression 2¹ sous pression avec la surface tactile 10 sur laquelle est disposée l'interface physique 20.

Ainsi, le contact CD de l'utilisateur U avec le bouton pression 2¹ est transmis à la surface tactile 10 comme si l'utilisateur avait mis son doigt directement avec la partie de la surface tactile 10 sur laquelle le contacteur 22¹ du bouton pression 2¹ est en contact CS.

En particulier, l'interface physique 20 comporte au moins une entretoise 210¹, 210^{1,2}, 210²...permettant d'isoler les contacteurs 22¹, 22²... des boutons pression 2¹, 2²... au repos de la surface tactile 10.

En particulier, l'interface physique 20 comporte un fournisseur d'identifiant 201, en l'occurrence équipé d'un contrôleur apte à émettre au terminal 1, 3 une commande d'adaptation de l'interface virtuelle du terminal adpt_cmd comportant un identifiant de l'interface physique *IP_id.*

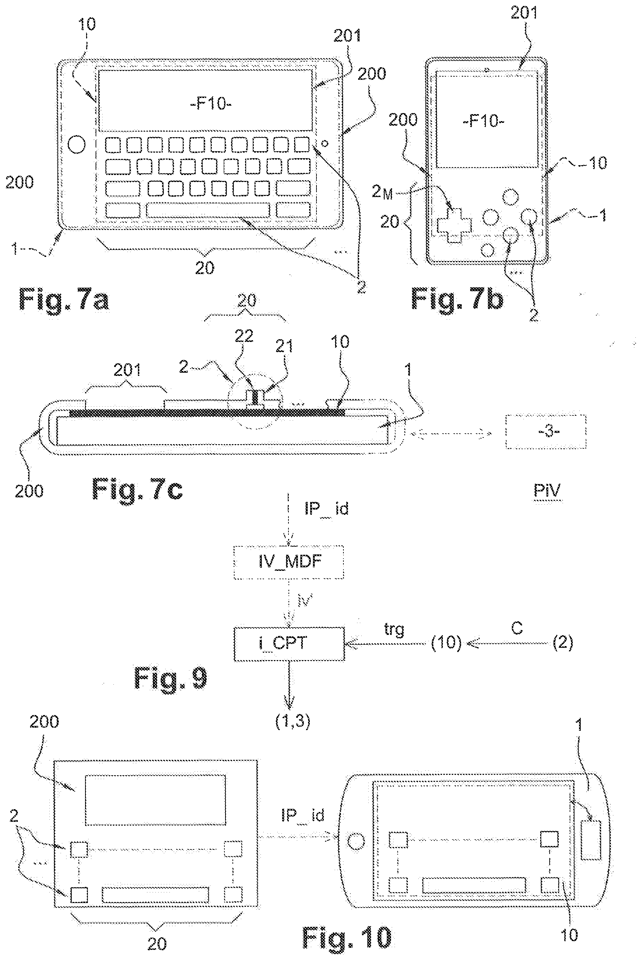

Les figures 7a, 7b et 7c illustrent des schémas simplifiés de protection selon l'invention.

Une protection 200 pour surface tactile 10, telle qu'une couverture frontale (cover en anglais), un étui (flipcase en anglais) ou une housse, recouvrant au moins une partie d'une surface tactile 10 apte à permettre une interaction avec un terminal 1, 3. La partie frontale de la protection 200 comportant au moins un bouton pression 2 pour surface tactile ou une interface physique 20 pour surface tactile comportant au moins un bouton pression 2 pour surface tactile. Le bouton pression 2 est apte à permettre une interaction avec un terminal 1, 3 par l'intermédiaire d'une surface tactile 10 lorsque le bouton pression 2 est positionné sur la surface tactile 10.

La figure 7a montre une vue globale d'une protection intégrant une interface physique de type clavier.

La partie frontale de la protection 200 se place devant l'écran tactile 10 d'un smartphone ou d'une tablette tactile 1. Eventuellement une fenêtre 201 est découpée dans la partie frontale de la protection 200 permettant à un utilisateur U d'accéder directement à une zone F10 de l'écran tactile 10 pour interagir avec le terminal 1.

Dans une autre zone de la partie frontale de la protection 200 sont placés plusieurs boutons pression 2 qui constitue une interface physique 20, en l'occurrence un clavier alphanumérique, au moyen duquel un utilisateur U peut interagir avec le terminal 1 par l'intermédiaire de l'écran tactile 10.

Les boutons pressions implémentés sont tels que décrits précédemment.

Eventuellement, la protection 200 comporte un code QR permettant d'identifier l'interface physique 20 qui peut être lu par le terminal 1 afin d'adapter l'interface virtuelle affichée par l'écran tactile 10 afin que l'interface virtuelle affichée par l'écran tactile correspondent à l'interface physique 20 placée sur l'écran tactile, notamment afin d'afficher un clavier alphanumérique virtuelle sur lequel le clavier alphanumérique physique 20 sera placé afin que la frappe sur une touche, par exemple la touche « Espace », du clavier alphanumérique physique 20 par un utilisateur entraîne un contact du bouton pression avec la zone de l'écran tactile 10 dans laquelle la touche correspondant à la même interaction, dans notre exemple la touche « Espace », du clavier alphanumérique virtuelle est affichée permettant de déclencher cette interaction, en l'occurrence la saisie d'un espace, par le terminal 1,

La figure 7b montre une vue globale d'une protection intégrant une interface physique de manette de jeux.

La partie frontale de la protection 200 se place devant l'écran tactile 10 d'un smartphone ou d'une tablette tactile 1. Eventuellement une fenêtre 201 est découpée dans la partie frontale de la protection 200 permettant à un utilisateur U d'accéder directement à une zone F10 de l'écran tactile 10 pour interagir avec le terminal 1.

Dans une autre zone de la partie frontale de la protection 200 sont placés plusieurs boutons pression 2 dont, en l'occurrence, au moins un bouton multi-contacteurs 2_{M}, qui constitue une interface physique 20, en l'occurrence une manette de jeux, au moyen duquel un utilisateur U peut interagir avec le terminal 1 par l'intermédiaire de l'écran tactile 10.

Les boutons pressions implémentés sont tels que décrits précédemment.

Eventuellement, la protection 200 comporte une puce RFID permettant de commander une adaptation de l'interface virtuelle affichée par l'écran tactile 10 du terminal 1. La puce RFID transmet au terminal notamment une commande d'adaptation comportant un identifiant de l'interface physique 20. Le terminal 1 met alors en oeuvre une adaptation l'interface virtuelle affichée par l'écran tactile 10 afin que l'interface virtuelle affichée par l'écran tactile 10 correspondent à l'interface physique 20 placée sur l'écran tactile, notamment afin d'afficher une manette de jeu virtuelle sur laquelle la manette de jeu physique 20 sera placée afin que la frappe sur un bouton ou une zone d'un bouton, par exemple le haut du bouton multidirectionnel 2_{M}, de la manette de jeu physique 20 par un utilisateur entraîne un contact du bouton pression ou de la zone du bouton pression avec la zone de l'écran tactile 10 dans laquelle le bouton correspondant à la même interaction, dans notre exemple le haut de la touche multidirectionnel, de la manette de jeu virtuelle est affichée permettant de déclencher cette interaction, en l'occurrence un déplacement vers le haut, par le terminal 1,

La figure 7c montre une vue en coupe d'un mode de réalisation d'une protection selon l'invention.

La protection 200 comporte au moins une partie frontale placé sur la surface tactile 10 permettant d'interagir avec un terminal 1, 3. Lorsque la protection 200 ne comporte qu'une partie frontale, il s'agit notamment d'un film se plaçant en protection d'un écran tactile par exemple par électricité statique.

La protection 200 peut aussi comporter une partie postérieure notamment lorsque la protection est un étui. Ainsi, l'interface physique 20 implémentée sur la partie frontale peut aisément être installée et retirée de la surface tactile.

Lorsque la protection 200 est une housse, le maintien de l'interface physique 20 implémentée sur la partie frontale de la protection 200 est mieux assuré.

Eventuellement, une fenêtre 201 est découpée dans la partie frontale de la protection 200 permettant d'accéder à la surface tactile. Cette fenêtre 201 est soit un vide de matériau permettant un accès direct à la surface tactile, soit un film d'un matériau permettant un contact tactile direct avec la surface tactile 10. Dans le cas où la surface tactile 10est un écran, ce film sera transparent permettant à l'utilisateur de voir l'affichage de l'écran tactile 10.

L'invention prévoit que la partie frontale de la protection 200 comporte une interface physique 20 comportant au moins un bouton pression pour surface tactile 2 ainsi placée sur la surface tactile 10. Le bouton pression 2 permet, notamment au moyen d'un contacteur 22, à un utilisateur U d'interagir avec le terminal 1, 3 par l'intermédiaire de la surface tactile 10. En particulier, le bouton pression 2, voire l'interface physique 20, est composée d'un matériau souple dont la déformation lors d'une pression met en contact le contacteur 22 avec la surface tactile 10.

La protection selon l'invention permet ainsi de protéger partiellement ou intégralement la surface tactile voire le terminal disposant d'un écran tactile tout en facilitant l'interaction avec le terminal.

En particulier, l'enveloppe du téléphone mobile ou smartphone deviendra notamment dans sa partie frontale une interface physique avec ce terminal. Cette interface physique pourra comprendre, selon la finalité de l'usage, un ensemble de boutons pression correspondant à des boutons de commandes, des touches de saisies, des curseurs, claviers.

En particulier, au moins la partie de l'interface physique amenée à être en contact avec la surface tactile lors d'une pression sur un bouton sera en matériau conductif.

L'interface physique 20 peut être de multiple forme clavier alphanumérique, pavé numérique, manette de jeux, console spécifique à une application, c'est-à-dire comportant les boutons pression essentiels pour interagir avec un terminal mettant en oeuvre cette application, telle qu'une application de Tweet, de SMS, de Tchat, etc.

Tout en protégeant la surface tactile 10, voire le terminal 1 équipé d'un écran tactile 10, l'interface physique 20 accroit l'utilisation intuitive du smartphone ou de la tablette. Par exemple, pour les joueurs, en particulier, les enfants, l'enveloppe 200 permet de renforcer la protection : résistance aux chocs, à l'eau tout en conservant la simplicité d'abord de l'interface physique 20 car correspondant aux consoles du jeu du marché.

Un autre apport de l'invention concerne la facilité de préhension de l'interface physique comparativement à un écran tactile notamment pour les personnes dont la mobilité des doigts est limitée ou atteintes d'hypoesthésie.

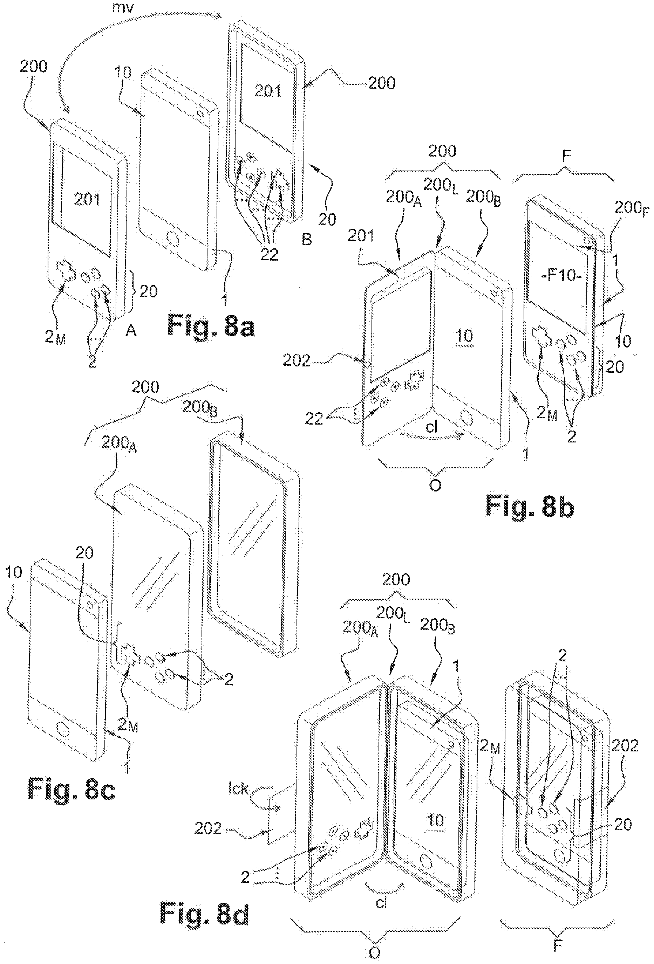

Les figures 8a, 8b, 8c et 8d illustrent des schémas simplifiés de différents exemples de réalisation d'une protection selon l'invention,

La figure 8a montre une protection sous forme de coque de protection habituellement placé au dos du terminal 1 pour le protéger des chocs en cas de chute comme le montre la coque 200 en position B. Cette même coque 200 peut être bougée mv par l'utilisateur pour être placé devant l'écran tactile 10 du terminal 1 comme le montre la coque en position A.

Alors la protection 200 comportant une ouverture 201 permet à l'utilisateur de lire, regarder des données affichées sur l'écran tactile 10 tout en utilisant soit la partie de l'écran tactile 10 accessible, soit l'interface physique 20 pour interagir avec le terminal 1 : notamment dans notre exemple où l'interface physique constitue une manette de jeux, déplacer le personnage dans le jeu notamment au moyen du bouton pression multi-contacteurs 2_{M} et effectuer des actions dans le jeu de ramassage, de coup porté, d'utilisation d'un objet, etc au moyen d'un ou plusieurs des boutons pression 2.

Sur la coque en position B sont visibles les contacteurs 22 placés, dans notre exemple, au centre des boutons pressions 2 et en 4 points distincts du bouton multi-contacteurs 2M. D'autres modes de réalisation des boutons pressions 2 et 2_{M} peuvent être utilisés pour l'interface physique d'une coque de protection 200 selon l'invention.

La figure 8b montre un étui, aussi nommé flipcase en anglais, constituant une protection 200 d'un terminal 1 avec un écran tactile 10. La figure 8b illustre deux positions distinctes de l'étui 200 : ouvert O et fermé F. Dans sa position fermée, l'étui 200 protège la face avant du terminal 1 comportant l'écran tactile 10. Dans sa position ouverte, l'étui 200 permet à un utilisateur d'accéder à la totalité de l'écran tactile pour afficher des données et/ou interagir avec le terminal directement sur la totalité de l'écran tactile.

L'étui 200 est composé d'une couverture frontale 200A et d'une couverture postérieure 200B.

La couverture postérieure 200B est fixe. Elle accueille le terminal 1 et maintien le terminal 1 sur la couverture frontale permettant une protection permanente du terminal 1 dans sa partie postérieure notamment en cas de chocs, de chute...

La couverture frontale 200A comporte une interface physique 20 selon l'invention et/ou au moins un bouton pression pour surface tactile 2, 2M selon l'invention. Cette couverture frontale 200A est reliée à la couverture postérieure 200B pour former l'étui 200 permettant de ne pas perdre ou oublier la couverture frontale lorsqu'elle n'est pas positionnée devant l'écran tactile 10. La liaison 200L entre la couverture frontale 200A et la couverture postérieure 200B peut être placé sur une largeur ou une longueur commune des deux couvertures 200A et 200B. Dans l'exemple de la figure 8b, la liaison 200L est faite sur la longueur de gauche des deux couvertures.

Cette liaison 200L facilite le passage d'une position à une autre : position ouverte O et position fermée F de l'étui. La figure 8b montre la fermeture *cl* de l'étui 200 qui passe alors de la position ouverte O à une position fermée F. La liaison 200 L peut être réalisée dans un matériau souple présent sur au moins une partie, voire la totalité, de la longueur ou largeur servant de liaison : par exemple en cuir lorsque l'étui est recouvert de ce matériau, en carton, en polymère, etc. mais aussi par des charnières...

La couverture frontale 200A de l'étui 200 comporte une ouverture 201 qui laisse apparaitre une fenêtre F10 de l'écran tactile 10. Cela permet à l'utilisateur de lire, regarder des données affichées sur l'écran tactile 10 tout en utilisant soit la partie de l'écran tactile 10 accessible, soit l'interface physique 20 pour interagir avec le terminal 1 : notamment dans notre exemple où l'interface physique constitue une manette de jeux, déplacer le personnage dans le jeu notamment au moyen du bouton pression multi-contacteurs 2_{M} et effectuer des actions dans le jeu de ramassage, de coup porté, d'utilisation d'un objet, etc. au moyen d'un ou plusieurs des boutons pression 2.

Sur la couverture frontale 200 en position O sont visibles les contacteurs 22 placés, dans notre exemple, au centre des boutons pressions 2 et en 4 points distincts du bouton multi-contacteurs 2M. D'autres modes de réalisation des boutons pressions 2 et 2_{M} peuvent être utilisés pour l'interface physique d'une coque de protection 200 selon l'invention.

Eventuellement, une fermeture 202 permet de maintenir l'étui 200 en position fermée F. Cette fermeture 202 est par exemple au moins un aimant qui va maintenir l'étui sur une partie conductrice du terminal 1.

Un exemple de réalisation non illustré est une housse de protection correspondant à une chaussette comportant deux faces dont une de ses faces : la face frontale présente une interface physique ou au moins un bouton pression selon l'invention. Avec une telle housse de protection, la question du maintien de l'interface physique sur la surface tactile ne se pose plus puisque la surface tactile 10, voire le terminal 1 lorsqu'il comporte l'écran tactile 10 est directement glissé dans la housse de protection 200 qui de par sa conception maintien l'interface physique sur la surface tactile 10 lorsque la surface tactile est glissé dans la housse pour que sa face frontale soit positionnée sur la surface tactile 10. Lorsque l'utilisateur choisit de ne plus interagir au moyen de la surface tactile, la position de la surface tactile dans la housse peut être modifiée pour que la face frontale soit placé au dos de la surface tactile, voire du terminal.

La figure 8c montre une protection 200 constituée d'une double coque : une coque postérieure 200B dans laquelle le terminal 1 vient se loger, protégeant le terminal 1 en cas de chocs, de chute... et une coque frontale 200A comportant au moins un bouton pression 2, 2_{M} pour surface tactile ou une interface physique 20 selon l'invention.

La coque frontale 200A peut être placée devant l'écran tactile 10 du terminal 1 et coopère avec la coque postérieure 200B pour enfermer le terminal 1 dans la protection 200 constituée par l'assemblage des deux coques 200A et 200B. Cette coopération permet le maintien de la coque frontale 200 A sur l'écran tactile 10.

Afin de permettre l'accès à l'affichage de l'écran 10 du terminal 1, soit la coque frontale 200A comporte une ouverture 201 (tel qu'illustré dans les modes de réalisation précédents), soit celle-ci est composé en matériau transparent ou translucide comme illustré sur la figure 8c. Ainsi, la protection 200 couvre entièrement le terminal 1 permettant suivant les moyens de coopération entre les deux coques de protéger contre les chutes et chocs non seulement le terminal mais aussi l'écran et contre des dégradations liés notamment à la poussière, au sable, contre des liquides, etc. Par exemple, la liaison (non illustrée) entre les deux coques 200A et 200B comporte un joint permettant une étanchéité. La liaison peut aussi être réalisée par emboitement des deux coques 200A et 200B l'une dans l'autre (les dimensions et/ou les matériaux des parties emboitantes des deux coques étant telles que l'ouverture de la protection 200 nécessite une manipulation déterminée: une pression ou une gestuelle prédéterminé d'au moins l'une des deux coques 200A, 200B.

La figure 8d montre un caisson 200 constituée de deux parties: une partie postérieure 200B dans laquelle le terminal 1 vient se loger, protégeant le terminal 1 en cas de chocs, de chute... et une partie frontale 200A comportant au moins un bouton pression 2, 2_{M} pour surface tactile ou une interface physique 20 selon l'invention, les deux parties 200A et 200B étant articulées l'une par rapport à l'autre.

La figure 8d illustre deux positions distinctes du caisson 200 : ouvert O et fermé F. Dans sa position fermée, le caisson 200 protège la totalité du terminal 1 y compris sa face avant comportant l'écran tactile 10. Dans sa position ouverte, le caisson 200 permet à un utilisateur d'accéder à la totalité de l'écran tactile pour afficher des données et/ou interagir avec le terminal directement sur la totalité de l'écran tactile.

La partie frontale 200A peut être placée devant l'écran tactile 10 du terminal 1 et coopère avec la partie postérieure 200B pour enfermer le terminal 1 dans la protection 200 constituée par l'assemblage des deux coques 200A et 200B. Cette coopération permet le maintien de la partie frontale 200 A sur l'écran tactile 10. Afin de d'assurer du maintien de la partie frontale 200 A devant l'écran, le caisson 200 comporte une fermeture 202. Dans l'exemple de la figure 8d, la fermeture 202 est articulée. Ainsi, l'utilisateur modifie la position de la fermeture 202 suivant qu'il souhaite ou non maintenir le caisson 200 en position fermée F ou non. Le verrouillage Ick de la fermeture 202 lorsque le caisson 200 est en position fermée F permet de garantir le maintien dans cette position. Ainsi, le maintien de l'interface 20 sur la surface tactile 10 est garanti.

Afin de permettre l'accès à l'affichage de l'écran 10 du terminal 1, soit la partie frontale 200A comporte une ouverture 201 (tel qu'illustré dans les modes de réalisation précédents), soit celle-ci est composé en matériau transparent ou translucide comme illustré sur la figure 8c. Ainsi, le caisson 200 couvre entièrement le terminal 1 permettant suivant les moyens de coopération entre les deux parties de protéger le terminal 1 et en particulier l'écran tactile 10 contre la poussière, le sable, voire l'étanchéité (protection contre liquide), etc. Par exemple, la liaison entre les deux parties 200A et 200B comporte un joint permettant une étanchéité. La liaison 200 L peut aussi être réalisée par emboitement des deux parties 200A et 200B l'une dans l'autre (les dimensions et/ou les matériaux des parties emboitantes des deux parties étant telles que l'ouverture de la protection 200 nécessite une manipulation déterminée: une pression ou une gestuelle prédéterminé d'au moins l'une des deux coques 200A, 200B. La fermeture 202 permet alors de garantir aussi la protection du terminal 1 et de l'écran tactile 10 non seulement contre les chocs, chutes, etc. mais aussi contre des dégradations liées par exemple aux particules : poussière, sables, aux liquides, etc. Le caisson 200 est alors étanche.

La figure 9 illustre un schéma simplifié d'un procédé d'interface virtuelle selon l'invention.

Le procédé d'interface virtuelle PIV d'un terminal comporte une capture d'une interaction I_CPT avec le terminal au moyen d'un bouton pression 2 pour surface tactile 10 par l'intermédiaire d'une surface tactile lorsque le bouton pression est positionné sur la surface tactile.

En particulier, le procédé d'interface virtuelle PIV comporte une modification de l'interface virtuelle IV_MDF en fonction d'un identifiant d'une interface physique *IP_id* pour surface tactile, l'interface physique comportant au moins un bouton pression pour surface tactile et un fournisseur de l'identifiant de l'interface physique au terminal.

Un mode de réalisation particulier du procédé d'interface virtuelle est un programme comprenant des instructions de code de programme pour l'exécution des étapes du procédé d'interface virtuelle lorsque ledit programme est exécuté par un processeur.

Ainsi, les logiciels d'applications d'un smartphone pourront éventuellement s'adapter à l'interface physique selon l'invention, en particulier lorsqu'il est implémentée sur une enveloppe protégeant le smartphone, et permettront les échanges entre l'interface physique de l'enveloppe et le terminal via l'écran tactile.

Aujourd'hui, un terminal 1 dans un mode veille peut permettre un nombre d'interaction limité via la surface tactile. Ce mode veille est alors appelé un mode veille léger. Actuellement, le mode veille léger permet de notifier d'un nouveau message reçu et d'ouvrir ce nouveau message reçu (éventuellement à condition qu'il s'agisse d'un message court : SMS, MMS, Tweet... ou le début d'un message plus long : email...), d'accepter un appel... mais pas d'accéder à l'ensemble des fonctions du terminal 1.

Dans un mode de réalisation particulier, l'interface virtuelle d'un mode veille léger permettra lorsqu'une interface physique selon l'invention est position sur la surface tactile non seulement de lire un nouveau message reçu mais aussi d'y répondre notamment lorsque l'interface physique est un clavier alphanumérique (éventuellement la réponse devra être limitée à un message court : SMS, MMS, Tweet ou de la taille d'un message court : email d'un nombre maximum de caractères...). La limite étant liée notamment à le fenêtre F10 permettant l'affichage du message sans utilisation d'un ascenseur.

La figure 10 illustre un schéma d'un terminal selon l'invention.

Un terminal 1 comportant une interface virtuelle 11 apte à capturer une interaction avec le terminal 1 au moyen d'un bouton pression 2 pour surface tactile par l'intermédiaire d'une surface tactile 10 lorsque le bouton pression 2 est positionné sur la surface tactile 10.

La figure 10 montre l'interface physique 20 comportant au moins un bouton pression 2 pour surface tactile, et un terminal 1 affichant sur un écran tactile 10 la partie visible d'une interface virtuelle 11. Lorsque l'interface physique 20 est placée sur l'écran tactile 10, un bouton pression physique 2 correspondra à une touche affichée par l'interface virtuelle 11 sur l'écran tactile 10. Ainsi, lorsqu'un utilisateur appuie sur le bouton pression physique 2, le contact établi par le bouton pression 2 avec l'écran tactile 10 sur la touche affichée par l'interface virtuelle déclenche une interaction avec le terminal 1 correspondant à l'interaction associée à la touche affichée sans que l'utilisateur n'ait touché directement cette touche virtuelle.

Afin que l'utilisateur n'ait pas à choisir son interface physique ou à positionner un ou plusieurs boutons pression physique en fonction d'un affichage d'une interface virtuelle sur l'écran tactile, l'interface physique 20 fournit au terminal 1 son identifiant IP_id permettant ainsi d'adapter l'interface virtuelle à l'interface physique placée sur la surface tactile 10.

Cette adaptation peut s'avérer lourde lorsque l'adaptation ne nécessite qu'un seul ou un nombre réduit de boutons pression et/ou un seul bouton multi-contacteurs.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. interface physique (20) pour surface tactile comportant :
• au moins un bouton pression physique (2) pour surface tactile, le bouton pression comportant un contacteur (22) traversant le bouton pression de la surface supérieure (2s) du bouton pression à la surface inférieure (2i) du bouton pression, le contacteur étant apte à permettre une interaction avec un terminal par l'intermédiaire d'une surface tactile lorsque le bouton pression est positionné sur la surface tactile, et **caractérisé en ce que** l'interface physique comporte en outre :
• un fournisseur (201) d'un identifiant de l'interface physique au terminal, le fournisseur d'identifiant comportant un contrôleur configuré pour générer une commande d'adaptation d'interface virtuelle, la commande d'adaptation incluant l'identifiant de l'interface physique, le fournisseur d'identifiant transmettant la commande d'adaptation, la commande d'adaptation étant apte à déclencher une modification d'une interface virtuelle mise en oeuvre par le terminal en fonction de l'identifiant de l'interface physique.

2. Interface physique selon la revendication précédente **caractérisée en ce que** :
• la surface supérieure du bouton pression permet à un doigt d'un utilisateur d'exercer une pression sur le bouton pression,
• la surface inférieure du bouton pression est apte à être positionnée au-dessus de la surface tactile et est apte à être mise en contact avec la surface tactile lorsqu'une pression est exercée sur le bouton pression, et
• le contacteur est positionné :
- sur la surface supérieure pour être en contact avec le doigt de l'utilisateur exerçant une pression sur la surface supérieure du bouton pression, et
- sur la surface inférieure pour être en contact avec la surface tactile lorsque la surface inférieure est mise en contact avec la surface tactile.

3. interface physique selon l'une quelconque des revendications précédentes **caractérisée en ce que** le bouton pression comporte plusieurs contacteurs, chaque contacteur ayant une position distincte sur la surface supérieure et la surface inférieure du bouton pression permettant une interaction avec une partie distincte de la surface tactile.

4. interface physique selon l'une quelconque des revendications précédentes **caractérisée en ce que** le bouton pression comporte des fixations (211) du bouton pression à une position relativement à la surface tactile.

5. interface physique selon l'une quelconque des revendications précédentes **caractérisée en ce que** le bouton pression est composé d'au moins un matériau souple (21).

6. interface physique selon l'une quelconque des revendications précédentes **caractérisée en ce que** le contacteur est composé d'un matériau conducteur.

7. Protection (4) pour surface tactile, la protection étant apte à recouvrir au moins une partie d'une surface tactile, la partie frontale de la protection comportant une interface physique (20) selon la revendication 1 pour surface tactile.

8. Procédé d'interface virtuelle d'un terminal (1, 3) comportant :
• une réception par le terminal de la commande d'adaptation d'interface virtuelle fournie par le fournisseur d'identifiant d'une interface physique (20) pour surface tactile selon la revendication 1,
• une modification d'une interface virtuelle mise en oeuvre par le terminal en fonction de l'identifiant de l'interface physique pour surface tactile inclus dans la commande d'adaptation, et
• une capture d'une interaction avec le terminal, au moyen du contacteur d'un du au moins un bouton pression de l'interface physique, par l'intermédiaire d'une surface tactile (10) lorsque le bouton pression est positionné sur la surface tactile.

9. Programme comprenant des instructions de code de programme pour l'exécution des étapes du procédé d'interface virtuelle selon la revendication précédente lorsque ledit programme est exécuté par un processeur.

10. Terminal (1,3) comportant une interface virtuelle mise en oeuvre par le terminal, le terminal étant configuré pour :
• recevoir la commande d'adaptation d'interface virtuelle fournie par le fournisseur d'identifiant d'une interface physique (20) pour surface tactile selon la revendication 1,
• modifier l'interface virtuelle (IV_MDF) en fonction de l'identifiant de l'interface physique pour surface tactile inclus dans la commande d'adaptation, et capturer une interaction (i_CPT) avec le terminal par l'intermédiaire d'une surface tactile lorsque le contacteur d'un du au moins un bouton pression de l'interface physique est positionné sur la surface tactile.

## Patentansprüche

1. Physische Schnittstelle (20) für eine berührungsempfindliche Fläche, umfassend:
• mindestens eine physische Drucktaste (2) für eine berührungsempfindliche Fläche, wobei die Drucktaste einen Kontaktgeber (22) umfasst, der die Drucktaste von der oberen Fläche (2s) der Drucktaste bis zur unteren Fläche (2i) der Drucktaste durchquert, wobei der Kontaktgeber geeignet ist, eine Interaktion mit einem Endgerät über eine berührungsempfindliche Fläche zu ermöglichen, wenn die Drucktaste auf der berührungsempfindlichen Fläche positioniert ist, und **dadurch gekennzeichnet, dass** die physische Schnittstelle ferner umfasst:
• eine Bereitstellungseinrichtung (201) einer Kennung der physischen Schnittstelle an das Endgerät, wobei die Kennungsbereitstellungseinrichtung einen Controller umfasst, der dazu ausgestaltet ist, einen Befehl zur Anpassung der virtuellen Schnittstelle zu erzeugen, wobei der Befehl zur Anpassung die Kennung der physischen Schnittstelle beinhaltet, wobei die Kennungsbereitstellungseinrichtung den Befehl zur Anpassung überträgt, wobei der Befehl zur Anpassung geeignet ist, eine Änderung einer virtuellen Schnittstelle auszulösen, die von dem Endgerät in Abhängigkeit von der Kennung der physischen Schnittstelle ausgeführt wird.

2. Physische Schnittstelle nach dem vorhergehenden Anspruch, **dadurch gekennzeichnet, dass**:
• die obere Fläche der Drucktaste einem Finger eines Benutzers ermöglicht, einen Druck auf die Drucktaste auszuüben,
• die untere Fläche der Drucktaste geeignet ist, über der berührungsempfindlichen Fläche positioniert zu werden, und geeignet ist, mit der berührungsempfindlichen Fläche in Kontakt gebracht zu werden, wenn ein Druck auf die Drucktaste ausgeübt wird, und
• der Kontaktgeber positioniert ist:
- auf der oberen Fläche, um mit dem Finger des Benutzers in Kontakt zu sein, der einen Druck auf die obere Fläche der Drucktaste ausübt, und
- auf der unteren Fläche, um mit der berührungsempfindlichen Fläche in Kontakt zu sein, wenn die untere Fläche mit der berührungsempfindlichen Fläche in Kontakt gebracht wird.

3. Physische Schnittstelle nach einem der vorhergehenden Ansprüche, **dadurch gekennzeichnet, dass** die Drucktaste mehrere Kontaktgeber umfasst, wobei jeder Kontaktgeber eine unterschiedliche Position auf der oberen Fläche und der unteren Fläche der Drucktaste hat, die eine Interaktion mit einem unterschiedlichen Teil der berührungsempfindlichen Fläche ermöglicht.

4. Physische Schnittstelle nach einem der vorhergehenden Ansprüche, **dadurch gekennzeichnet, dass** die Drucktaste Fixierungen (211) der Drucktaste an einer Position relativ zu der berührungsempfindlichen Fläche umfasst.

5. Physische Schnittstelle nach einem der vorhergehenden Ansprüche, **dadurch gekennzeichnet, dass** die Drucktaste aus mindestens einem flexiblen Material (21) besteht.

6. Physische Schnittstelle nach einem der vorhergehenden Ansprüche, **dadurch gekennzeichnet, dass** der Kontaktgeber aus einem leitenden Material besteht.

7. Schutz (4) für eine berührungsempfindliche Fläche, wobei der Schutz geeignet ist, mindestens einen Teil einer berührungsempfindlichen Fläche zu bedecken, wobei der frontale Teil des Schutzes eine physische Schnittstelle (20) nach Anspruch 1 für eine berührungsempfindliche Fläche umfasst.

8. Virtuelle-Schnittstelle-Verfahren für ein Endgerät (1, 3), umfassend:
• ein Empfangen, durch das Endgerät, des Befehls zur Anpassung der virtuellen Schnittstelle, der von der Kennungsbereitstellungseinrichtung einer physischen Schnittstelle (20) für eine berührungsempfindliche Fläche nach Anspruch 1 bereitgestellt wird,
• eine Änderung einer virtuellen Schnittstelle, die von dem Endgerät in Abhängigkeit von der Kennung der physischen Schnittstelle für eine berührungsempfindliche Fläche, die in dem Befehl zur Anpassung enthalten ist, ausgeführt wird, und
• ein Erfassen einer Interaktion mit dem Endgerät mittels des Kontaktgebers einer der mindestens einen Drucktaste der physischen Schnittstelle über eine berührungsempfindliche Fläche (10), wenn die Drucktaste auf der berührungsempfindlichen Fläche positioniert ist.

9. Programm mit Programmcodeanweisungen, die bei der Ausführung des Programms durch einen Prozessor die Schritte des Virtuelle-Schnittstelle-Verfahrens nach dem vorhergehenden Anspruch ausführen.

10. Endgerät (1,3), umfassend eine virtuelle Schnittstelle, die von dem Endgerät ausgeführt wird, wobei das Endgerät dazu ausgestaltet ist:
• den Befehl zur Anpassung der virtuellen Schnittstelle zu empfangen, der von der Kennungsbereitstellungseinrichtung einer physischen Schnittstelle (20) für eine berührungsempfindliche Fläche nach Anspruch 1 bereitgestellt wird,
• die virtuelle Schnittstelle (IV _MDF) in Abhängigkeit von der Kennung der physischen Schnittstelle für eine berührungsempfindliche Fläche, die in dem Befehl zur Anpassung enthalten ist, zu ändern und eine Interaktion (i_CPT) mit dem Endgerät über eine berührungsempfindliche Fläche zu erfassen, wenn der Kontaktgeber einer der mindestens einen Drucktaste der physischen Schnittstelle auf der berührungsempfindlichen Fläche positioniert ist.

## Claims

1. Physical interface (20) for a touch-sensitive surface including:
• at least one physical pushbutton (2) for a touch-sensitive surface, the pushbutton including a contactor (22) passing through the pushbutton from the upper surface (2s) of the pushbutton to the lower surface (2i) of the pushbutton, the contactor being able to allow an interaction with a terminal by way of a touch-sensitive surface when the pushbutton is positioned on the touch-sensitive surface, and **characterized in that** the physical interface furthermore includes:
• a provider (201) of an identifier of the physical interface to the terminal, the identifier provider including a controller configured to generate a virtual interface adaptation command, the adaptation command including the identifier of the physical interface, the identifier provider transmitting the adaptation command, the adaptation command being able to trigger a modification of a virtual interface implemented by the terminal depending on the identifier of the physical interface.

2. Physical interface according to the preceding claim, **characterized in that**:
• the upper surface of the pushbutton allows a finger of a user to exert a pressure on the pushbutton,
• the lower surface of the pushbutton is able to be positioned above the touch-sensitive surface and is able to be brought into contact with the touch-sensitive surface when a pressure is exerted on the pushbutton, and
• the contactor is positioned:
- on the upper surface so as to be in contact with the finger of the user exerting a pressure on the upper surface of the pushbutton, and
- on the lower surface so as to be in contact with the touch-sensitive surface when the lower surface is brought into contact with the touch-sensitive surface.

3. Physical interface according to either one of the preceding claims, **characterized in that** the pushbutton includes a plurality of contactors, each contactor having a separate position on the upper surface and the lower surface of the pushbutton, allowing an interaction with a separate part of the touch-sensitive surface.

4. Physical interface according to any one of the preceding claims, **characterized in that** the pushbutton includes fasteners (211) for fastening the pushbutton in a position in relation to the touch-sensitive surface.

5. Physical interface according to any one of the preceding claims, **characterized in that** the pushbutton is formed of at least one flexible material (21).

6. Physical interface according to any one of the preceding claims, **characterized in that** the contactor is formed of a conductive material.

7. Protector (4) for a touch-sensitive surface, the protector being able to cover at least part of a touch-sensitive surface, the frontal part of the protector including a physical interface (20) according to Claim 1 for a touch-sensitive surface.

8. Virtual interface method for a terminal (1, 3), including:
• the terminal receiving the virtual interface adaptation command provided by the provider of an identifier of a physical interface (20) for a touch-sensitive surface according to Claim 1,
• modifying a virtual interface implemented by the terminal depending on the identifier of the physical interface for a touch-sensitive surface included in the adaptation command, and
• capturing an interaction with the terminal, by means of the contactor of one of the at least one pushbutton of the physical interface, by way of a touch-sensitive surface (10) when the pushbutton is positioned on the touch-sensitive surface.

9. Program comprising program code instructions for executing the steps of the virtual interface method according to the preceding claim when said program is executed by a processor.

10. Terminal (1, 3) including a virtual interface implemented by the terminal, the terminal being configured to:
• receive the virtual interface adaptation command provided by the provider of an identifier of a physical interface (20) for a touch-sensitive surface according to Claim 1,
• modify the virtual interface (IV MDF) depending on the identifier of the physical interface for a touch-sensitive surface included in the adaptation command, and capture an interaction (i_CPT) with the terminal by way of a touch-sensitive surface when the contactor of one of the at least one pushbutton of the physical interface is positioned on the touch-sensitive surface.
